# EUROPÄISCHE PATENTSCHRIFT

(11) **EP 4 080 306 B1**
(45) Veröffentlichungstag und Bekanntmachung des Hinweises auf die Patenterteilung: **30.10.2024**
(21) Anmeldenummer: 22158943.5
(22) Anmeldetag: 25.02.2022
(51) Int. Cl.: G05D 1/00, B62D 15/02, B62D 1/00, G05D 1/223, G05D 1/222

(54) **FAHRZEUGFÜHRUNGSSYSTEM FÜR EIN FAHRERLOS STEUERBARES FAHRZEUG**
VEHICLE GUIDANCE SYSTEM FOR A DRIVERLESS VEHICLE
SYSTÈME DE GUIDAGE DE VÉHICULE POUR UN VÉHICULE AUTONOME SANS CONDUCTEUR

(30) Priorität: 23.04.2021 DE 102021204076
(43) Veröffentlichungstag der Anmeldung: 26.10.2022
(73) Patentinhaber: VOLKSWAGEN AG, 38440 Wolfsburg (DE)
(72) Erfinder: Leibel, Wassili, 27751 Delmenhorst (DE); Rüger, Tobias, 38108 Braunschweig (DE); Kreis, Christopher, 38126 Braunschweig (DE)

(56) Entgegenhaltungen:
- DE-A1- 102013 226 267
- US-A1- 2005 280 389
- US-A1- 2011 275 274
- US-A1- 2019 049 547
- US-A1- 2020 011 017

## Beschreibung

### Technisches Gebiet

Die Erfindung betrifft ein Fahrzeugführungssystem für ein fahrerlos steuerbares Fahrzeug, das insbesondere ohne Lenkrad und zur Fahrzeugführung geeignete Pedale ausgebildet sein kann. Dabei richtet sich die Erfindung insbesondere auf Schnittstellen, die die erforderliche Kommunikation zwischen einer Fernsteuereinheit, die zur Führung des Fahrzeugs eingesetzt wird, und einem fahrzeugeigenen Kommunikationssystem, in dem integrierte Steuergeräte des Fahrzeugs angebunden sind, ermöglichen. Beim Fahrzeug kann es sich zwar insbesondere um ein Kraftfahrzeug handeln, es kann aber auch ein beliebiges anderes Land-, Luft- oder Wasserfahrzeug sein.

### Technischer Hintergrund

Künftige autonom fahrende Fahrzeuge werden kein Lenkrad sowie keine Brems- und Gaspedale aufweisen. Bei Wartungs- und Servicearbeiten müssen die Fahrzeuge aber gegebenenfalls nach wie vor durch einen menschlichen Fahrer, wie einen Werkstattmechaniker oder Servicemitarbeiter, bewegt und geführt werden können. Für solche Benutzer wird dann ein fahrzeugführendes Bedienelement in einer geeigneten Fernsteuereinheit benötigt.

Damit das fahrzeugführende Bedienelement einer Fernsteuereinheit in die Fahrzeuglängs- und Querführung eingreifen kann, wird dabei eine Schnittstelle zwischen dem Fahrzeug und dem Bedienelement benötigt. Im Stand der Technik sind allgemeine Lösungsansätze für eine bedarfsweise aktivierbare Fernsteuerung eines Fahrzeugs beispielsweise aus EP 2 762 988 B1 oder aus US 2017/0308075 A1 bekannt, geeignete Schnittstellen sind aber nicht näher spezifiziert und erfordern im Einzelfall daher einen hohen zusätzlichen Entwicklungsaufwand.

Weiterhin offenbart US 2020/0011017 A1 ein Verfahren zum Betreiben einer selbstfahrenden Straßenbaumaschine, deren Fahrwerk und mindestens eine weitere Komponente wie ein Vorratsbehälter für das Straßenbaumaterial etc. von einem Bediener aus einer über dem Fahrwerk angeordneten Bedienungsstation gesteuert werden. Das Fahrwerk und/oder mindestens eine weitere Komponente können vom Bediener auch von außerhalb der Bedienungsstation über ein Übermittlungsmodul ferngesteuert werden, über welches Daten oder Befehle zum Betreiben der Straßenbaumaschine mit einem oder mehreren an Bord befindlichen Empfangsmodulen ausgetauscht werden. Das Empfangsmodul kann beispielsweise direkt mit einer Steuereinheit verbunden sein, über die die gesamte Straßenbaumaschine steuerbar ist, und beispielsweise mittels eines CAN-Bussystems mit deren einzelnen Komponenten kommunizieren. Der Datenaustausch zwischen dem Übermittlungsmodul und dem Empfangsmodul ist drahtlos, alternativ kann das Übermittlungsmodul aber auch in der Bedienungsstation angedockt sein und wie eine herkömmliche Steuereinheit bedient werden. Das Übermittlungsmodul kann auch Feedback mit Information über bestimmte Zustände der Komponenten und Bedienungsparameter der Straßenbaumaschine empfangen und ein Display zum Anzeigen dieser und anderer Informationen für den Bediener aufweisen.

Ferner beschreibt US 2019/0049547 A1 ein Fahrzeug mit einer elektronischen Steuereinheit zum Ausführen einer Funktion des autonomen Fahrens und einer OBD-Schnittstelle zum Anschließen eines Dongles und zur Herstellung einer Kommunikationsverbindung zum Dongle. Das Fahrzeug weist ferner eine Fahrerassistenzsteuerung auf, die zum Empfangen von Instruktionen vom Dongle eingerichtet ist, wenn sich das Fahrzeug auf dem Gelände einer Rennveranstaltung befindet, um die Funktion des autonomen Fahrens und/oder die Fahrerassistenzsysteme beim Erhalten dieser Instruktionen auszuschalten. Diese Instruktionen werden von einer Fernsteuereinheit der Rennveranstaltung an alle teilnehmenden Fahrzeuge drahtlos übertragen, um deren autonome Fahrsteuerung und Fahrerassistenzsysteme für die Dauer der Rennveranstaltung auszuschalten.

Der Weiteren offenbart DE 10 2013 226 267 A1 ein Kraftfahrzeug, umfassend ein internes Steuerungssystem mit mindestens einem Mikrocontroller, Sensoren und Aktuatoren, welche kommunikativ miteinander verbunden sind, und mit einer Schnittstelle zur Herstellung einer Steckverbindung mit einer externen Steuerungseinrichtung, um individuelle automatisierte Fahrvorgänge wie beispielsweise das Verladen von Fahrzeugen zu ermöglichen. Dabei ermöglicht die Schnittstelle der externen Steuerungseinrichtung eine Kommunikation mit dem Mikrocontroller und/oder mindestens einem Aktuator zur Aktivierung von Fahrfunktionen, insbesondere auf einer Fahrzeugführungsebene.

Aus US 2005/0280389 A1 ist ferner eine motorgetriebene Servolenkvorrichtung bekannt. In dieser Zahnstangen-/Ritzel-Servolenkvorrichtung sind ein Zahnstangenposition-Erfassungsmittel, ein Mittel zum arithmetischen Berechnen der Zahnstangengeschwindigkeit und ein Speichermittel, das eine Beziehung zwischen der vorgegebenen Zahnstangengeschwindigkeit in der Nähe eines Hubendes der Zahnstange und einer Motordämpfungssteuerungsstart-Zahnstangenposition vom Hubende in Abhängigkeit von der Zahnstangengeschwindigkeit variiert, vorgesehen. Ein Zusammenführungsmittel vergleicht die in dem Speichermittel gespeicherten Kennlinien der Motordämpfungssteuerungsstart-Zahnstangenposition mit der Zahnstangengeschwindigkeit, um festzustellen, ob eine Koordinate aus der berechneten Zahnstangengeschwindigkeit und der erfassten Zahnstangenposition über jener Kennlinie liegt. Ein Motorantrieb-Steuermittel steuert den Motor anhand einer vorgegebenen Motorunterstützungs-Abnahmerate in einem gedämpften Zustand, wenn das Zusammenführungsmittel feststellt, dass jene Koordinate über der Kennlinie liegt.

Es ist Aufgabe der vorliegenden Erfindung, ein alternatives oder verbessertes Fahrzeugführungssystem für ein fahrerlos steuerbares, insbesondere lenkrad- und pedalenloses Fahrzeug bereitzustellen. Das Fahrzeugführungssystem kann dabei insbesondere im Hinblick auf erforderliche Kommunikationsschnittstellen zwischen einer Fernsteuereinheit und dem Fahrzeug verbessert sein.

### Offenbarung der Erfindung

Diese Aufgabe wird durch ein Fahrzeugführungssystem gemäß dem unabhängigen Anspruch 1 (erste Variante der Erfindung) oder gemäß dem abhängigen Anspruch 3 (zweite Variante der Erfindung) gelöst. Weitere Ausgestaltungen sind in den abhängigen Ansprüchen angegeben. Gemäß der Erfindung ist ein Fahrzeugführungssystem für ein fahrerlos steuerbares, insbesondere lenkrad- und pedalenloses Fahrzeug vorgesehen, wobei das Fahrzeugführungssystem eine Fernsteuereinheit und eine Befehlsübersetzungseinheit umfasst. Die Fernsteuereinheit weist eine Benutzeroberfläche auf, die zur Eingabe von Fahrzeugführungsvorgaben durch einen Benutzer ausgebildet ist.

Die Fahrzeugführungsvorgaben umfassen dabei eine oder mehrere Vorgaben zur Fahrzeuglängsführung, insbesondere zu einer Geschwindigkeit und/oder Beschleunigung des Fahrzeugs, oder zusätzlich oder alternativ eine oder mehrere Vorgaben zur Fahrzeugquerführung, insbesondere zu einem Lenkwinkel und/oder einer Lenkwinkelgeschwindigkeit. Beispiele entsprechender Eingabemöglichkeiten hierfür über die Benutzeroberfläche der Fernsteuereinheit sind weiter unten angegeben und können unter anderem Touchpads, Tasten wie Schiebe- und Pfeiltasten, analoge Schultertasten, analoge Sticks sowie in einer mobilen Fernsteuereinheit eingebaute Drehbewegungssensoren wie Gyrometer und vieles mehr umfassen.

Die Befehlsübersetzungseinheit ist dazu ausgebildet, die eingegebenen Fahrzeugführungsvorgaben zu erhalten, abhängig davon Sollwerte mindestens eines fahrzeugführungsrelevanten Fahrzeugparameters zu ermitteln und entsprechende Botschaften, die integrierten Steuergeräten des Fahrzeugs zur Ansteuerung entsprechender Fahrzeugaktuatoren bekannt sind, zu erzeugen.

Dabei ist die Befehlsübersetzungseinheit zum Übermitteln der erzeugten Botschaften an die integrierten Steuergeräte des Fahrzeugs ausgebildet. Hierzu weist sie eine drahtgebundene Kommunikationsschnittstelle auf, die zum Anschließen an eine genormte (d. h. beispielsweise fahrzeugart- und modellübergreifend standardisierte) drahtgebundene Schnittstelle des fahrzeugeigenen Kommunikationssystems, in welchem diese Steuergeräte angebunden sind, ausgebildet ist.

Eine Idee des vorliegenden Fahrzeugführungssystems für ein lenkrad- und pedalenloses Fahrzeug besteht somit in seiner Ausstattung mit einer für verschiedene Modelle, Hersteller und/oder Fahrzeugarten einheitlichen drahtgebundenen Kommunikationsschnittstelle, die an eine in den Fahrzeugen standardmäßig vorhandene, genormte drahtgebundene Schnittstelle anschließbar ist. Dadurch wird eine Vielzahl an unterschiedlichen Schnittstellen für derartige Fahrzeugführungssysteme vermeidbar. Diese Standardisierung kann beispielsweise einen reibungslosen Ablauf bei Pannenhilfen, Wartung und Reparatur für Fahrzeuge ohne Lenkrad und Pedale an jedem Ort und in jeder Werkstatt ermöglichen.

Gemäß der Erfindung handelt es sich bei der genormten drahtgebundenen Schnittstelle des fahrzeugeigenen Kommunikationssystems, an der die drahtgebundene Kommunikationsschnittstelle der Befehlsübersetzungseinheit anschließbar ist, um eine zur On-Board-Diagnose ausgebildete Schnittstelle. Insbesondere kann es eine bereits standartmäßig an Bord moderner Fahrzeuge vorgesehene, unter der Bezeichnung OBD-2 (auch OBD2 oder OBD II) bekannte Schnittstelle sein. Diese Schnittstelle ist zu der hierin dargelegten Funktionalität geeignet und/oder kann künftig gegebenenfalls zusätzlich um weitere, hierin nachfolgend im Einzelnen dargelegte Funktionen erweitert sein.

Beim fahrzeugeigenen Kommunikationssystem (hierin auch Fahrzeugkommunikationssystem oder internes Fahrzeugkommunikationssystem genannt), in welchem diverse Steuergeräte und Sensoren des Fahrzeugs angebunden sind, kann es sich um ein geeignetes Fahrzeugbussystem, beispielsweise einen CAN-Bus, handeln. Dementsprechend kann es sich bei den von der Befehlsübersetzungseinheit erzeugten Botschaften, die beispielsweise die ermittelten Sollwerte der fahrzeugführungsrelevanten Fahrzeugparameter in einer den integrierten Geräten des Fahrzeugs bekannten Form enthalten, um Botschaften einer CAN-Kommunikation oder weitere Botschaften in einem Fahrzeugbussystem handeln.

Bei der Benutzeroberfläche zur Eingabe der Fahrzeugführungsvorgaben kann es sich beispielsweise um eine App oder ein Programm auf einem mobilen Gerät handeln. Ferner kann es sich bei der Fernsteuereinheit bzw. deren Benutzeroberfläche auch um ein Gamepad, einen Joystick oder ähnliche zumindest teilweise analoge Eingabeeinrichtungen handeln, die die Fahrzeugführung für den Benutzer möglichst realitätsnah gestalten können. Einige Beispiele sind hierin weiter unten angegeben.

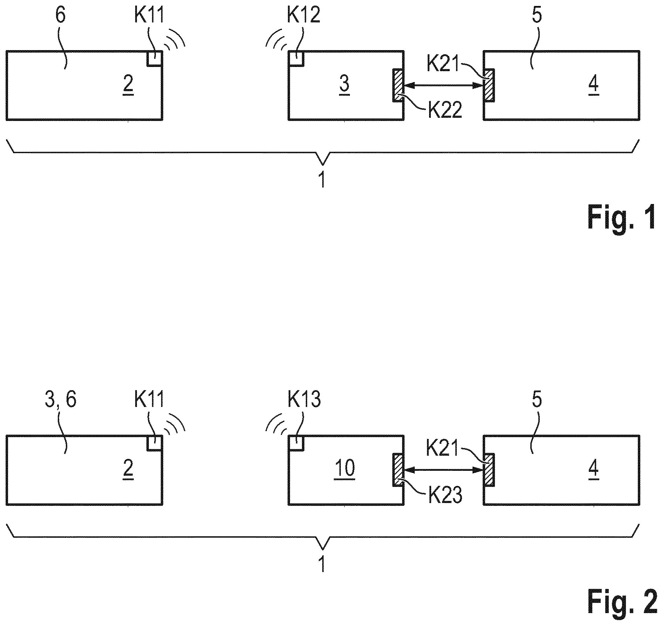

Insbesondere kann bei der vorliegenden ersten Variante der Erfindung die Befehlsübersetzungseinheit als eine von der Fernsteuereinheit räumlich getrennte, kompakte Baugruppe ausgebildet sein (vgl. Fig. 1). Die Fernsteuereinheit ist in diesem Fall zum drahtlosen Übermitteln der eingegebenen Fahrzeugführungsvorgaben an die Befehlsübersetzungseinheit ausgebildet und weist hierzu eine drahtlose Kommunikationsschnittstelle auf. Entsprechend ist auch die Befehlsübersetzungseinheit zum drahtlosen Empfangen der eingegebenen Fahrzeugführungsvorgaben von der Fernsteuereinheit ausgebildet und weist hierzu eine entsprechend ausgebildete drahtlose Kommunikationsschnittstelle auf.

Insbesondere kann dabei die drahtgebundene Kommunikationsschnittstelle der Befehlsübersetzungseinheit zu einer lösbaren Verbindung - beispielsweise zu einer elektrischen oder optischen Steckverbindung - mit der genormten drahtgebundenen Schnittstelle des fahrzeugeigenen Kommunikationssystems ausgebildet sein. So kann die räumlich kompakte Befehlsübersetzungseinheit beispielsweise einen elektrischen Stecker aufweisen, um an eine als Buchse ausgebildete OBD-2-Schnittstelle des Fahrzeugs zur Kommunikation mit den integrierten Geräten und Sensoren des Fahrzeugs angeschlossen zu werden.

Gemäß einer zweiten Variante der Erfindung umfasst ein Fahrzeugführungssystem für ein fahrerlos steuerbares, insbesondere lenkrad- und pedalenloses Fahrzeug eine Fernsteuereinheit, eine Befehlsübersetzungseinheit und zusätzlich eine Übertragungseinheit.

Diese Variante unterscheidet sich von der obigen ersten Variante nur dadurch, dass hier die Übertragungseinheit die Erzeugung und Übermittlung der Botschaften für das fahrzeugeigene Kommunikationssystem übernimmt, während die Befehlsübersetzungseinheit nur noch die Ermittlung der Sollwerte der fahrzeugführungsrelevanten Fahrzeugparameter ausführt. Dies ermöglicht eine andere Verteilung der im Übrigen gleichen Aufgaben der hierin beschriebenen Funktionalität auf einzelne Geräte des Fahrzeugführungssystems.

Bei der vorliegenden zweiten Variante weist die Fernsteuereinheit - wie bei der ersten Variante auch - eine Benutzeroberfläche auf, die zur Eingabe von Fahrzeugführungsvorgaben durch einen Benutzer ausgebildet ist. Die Befehlsübersetzungseinheit ist dazu ausgebildet, die eingegebenen Fahrzeugführungsvorgaben zu erhalten und abhängig davon Sollwerte mindestens eines fahrzeugführungsrelevanten Fahrzeugparameters zu ermitteln.

Die Übertragungseinheit ist nun dazu ausgebildet, die von der Befehlsübersetzungseinheit ermittelten Sollwerte zu erhalten und entsprechende Botschaften, die integrierten Steuergeräten des Fahrzeugs zur Ansteuerung entsprechender Fahrzeugaktuatoren bekannt sind, zu erzeugen. Dabei ist die Übertragungseinheit zum Übermitteln der erzeugten Botschaften an die integrierten Steuergeräte des Fahrzeugs ausgebildet und weist hierzu eine drahtgebundene Kommunikationsschnittstelle auf, die zum Anschließen an eine genormte (d. h. beispielsweise fahrzeugart- und modellübergreifend standardisierte) drahtgebundene Schnittstelle des fahrzeugeigenen Kommunikationssystems, in welchem diese Steuergeräte angebunden sind, ausgebildet ist.

Wie bei der ersten Variante, ist auch hier gemäß einer Ausführungsform die genormte drahtgebundene Schnittstelle des fahrzeugeigenen Kommunikationssystems, an der die drahtgebundene Kommunikationsschnittstelle der Übertragungseinheit anschließbar ist, eine zur On-Board-Diagnose ausgebildete Schnittstelle. Insbesondere kann es eine bereits standartmäßig an Bord moderner Fahrzeuge vorgesehene, unter der Bezeichnung OBD-2 (auch OBD2 oder OBD II) bekannte Schnittstelle sein. Diese Schnittstelle ist zu der hierin dargelegten Funktionalität geeignet und/oder kann künftig gegebenenfalls zusätzlich um weitere, hierin nachfolgend im Einzelnen dargelegte Funktionen erweitert sein.

Insbesondere kann bei der zweiten Variante der Erfindung die Befehlsübersetzungseinheit in der Fernsteuereinheit integriert sein und somit die eingegebenen Fahrzeugführungsvorgaben direkt erhalten (vgl. Fig. 2). Die Fernsteuereinheit kann in diesem Fall zum drahtlosen Übermitteln der von der Befehlsübersetzungseinheit ermittelten Sollwerte an die Übertragungseinheit ausgebildet sein und hierzu eine drahtlose Kommunikationsschnittstelle aufweisen. Bei dieser spezifischen Ausgestaltung kann die Übertragungseinheit von der Fernsteuereinheit räumlich getrennt und zum drahtlosen Empfangen der ermittelten Sollwerte von dieser ausgebildet sein. Hierzu weist sie ebenfalls eine entsprechend ausgebildete drahtlose Kommunikationsschnittstelle auf.

Auch bei der zweiten Variante kann die drahtgebundene Kommunikationsschnittstelle der Übertragungseinheit zu einer lösbaren Verbindung - beispielsweise zu einer elektrischen oder optischen Steckverbindung - mit der genormten drahtgebundenen Schnittstelle des fahrzeugeigenen Kommunikationssystems ausgebildet sein. So kann die räumlich kompakte Übertragungseinheit beispielsweise einen elektrischen Stecker aufweisen, um an eine als Buchse ausgebildete OBD-2-Schnittstelle des Fahrzeugs zur Kommunikation mit darin integrierten Geräten und Sensoren angeschlossen zu werden.

Die nachfolgend beschriebenen Merkmale und Eigenschaften beziehen sich auf beide oben genannte Varianten der Erfindung gleichermaßen:
Bei einer wichtigen spezifischen Ausgestaltung sind die Befehlsübersetzungseinheit (bei der ersten Variante der Erfindung) bzw. Übertragungseinheit (bei der zweiten Variante der Erfindung) ferner dazu ausgebildet, über die genormte drahtgebundene Schnittstelle des fahrzeugeigenen Kommunikationssystems bestimmte fahrbetriebsrelevante Fahrzeugdaten von integrierten Sensoren des Fahrzeugs, die ebenfalls im fahrzeugeigenen Kommunikationssystem angebunden sind, und/oder von den integrierten Steuergeräten des Fahrzeugs zu empfangen. Diese fahrbetriebsrelevanten Fahrzeugdaten, wie beispielsweise die aktuelle Fahrzeuggeschwindigkeit, Zahnstangenposition, eingelegter Gang, Kameradaten oder weitere Daten, welche durch die fahrzeugeigene Sensorik erfassbar sind, sollen bei der Ermittlung der Sollwerte der fahrzeugführungsrelevanten Fahrzeugparameter hinzugezogen werden. Dementsprechend ist die Befehlsübersetzungseinheit dazu ausgebildet, diese Daten zu empfangen und die Sollwerte der Fahrzeugparameter auch abhängig davon zu ermitteln. Insbesondere kann dabei die Fernsteuereinheit zusätzlich dazu ausgebildet sein, zumindest einige dieser fahrbetriebsrelevanten Fahrzeugdaten zu erhalten und dem Benutzer in der Benutzeroberfläche anzuzeigen.

Insbesondere kann die Befehlsübersetzungseinheit dazu ausgebildet sein, die Sollwerte mindestens eines der Fahrzeugparameter jeweils anhand einer von mehreren untereinander umschaltbaren Kennlinien zu ermitteln. Eine solche Kennlinie kann hierbei über die Benutzeroberfläche der Fernsteuereinheit umschaltbar sein. Dadurch kann beispielsweise die erreichbare Maximalgeschwindigkeit je na Anforderungslage vom Benutzer selbst variiert werden. Beispielsweise können bei dieser Ausführungsform über geeignete Taster die Kennlinien zur Beschleunigungs-, Brems- und Lenkvorgabevorgabe variierbar sein, um dem Benutzer bei Bedarf ein agileres Lenken oder stärkeres Beschleunigen, bzw. umgekehrt, zu ermöglichen.

Insbesondere können ferner die Befehlsübersetzungseinheit und gegebenenfalls die Übertragungseinheit dazu ausgebildet sein, das Erzeugen und Übermitteln der Botschaften an die integrierten Steuergeräte des Fahrzeugs periodisch mit einer vorbestimmten Zykluszeit von beispielsweise etwa 1 ms durchzuführen, beispielsweise um die integrierten Steuergeräte des Fahrzeugs kontinuierlich mit Botschaften zur Fahrzeugführung zu versorgen und dadurch eine flüssige und gut funktionierende Fahrzeugführung- und Bewegung zu gewährleisten.

Dabei kann die beim jeweiligen Zyklus erzeugte und an das fahrzeugeigene Kommunikationssystem übermittelte Botschaft auf eine vorbestimmte Anzahl von Sollwerten unterschiedlicher Fahrzeugparameter beschränkt sein oder stets die gleiche Anzahl von Sollwerten zum Inhalt haben, um das fahrzeugeigene Kommunikationssystem vor Überlastung zu schützen. Von Zyklus zu Zyklus können die Steuergeräte bzw. Aktuatoren, für die diese Sollwerte bestimmt sind, gleichbleiben oder aber bei Bedarf auch variieren. Die Anzahl pro Zyklus übermittelbarer Sollwerte kann dabei insbesondere zwei, drei, vier oder fünf betragen. Idealerweise sind es drei Sollwerte pro Zyklus, die beispielsweise die einzuregelnde Längsgeschwindigkeit (oder Längsbeschleunigung), den Lenkwinkel und die Lenkwinkelgeschwindigkeit des Fahrzeugs vorgeben können. Je nach Fahrsituation können bei Bedarf beispielsweise ein oder zwei weitere Sollwerte für weitere Fahrzeugparameter, die z. B. das Betätigen eines Blinkers oder einer Hupe bewirken sollen, hinzukommen.

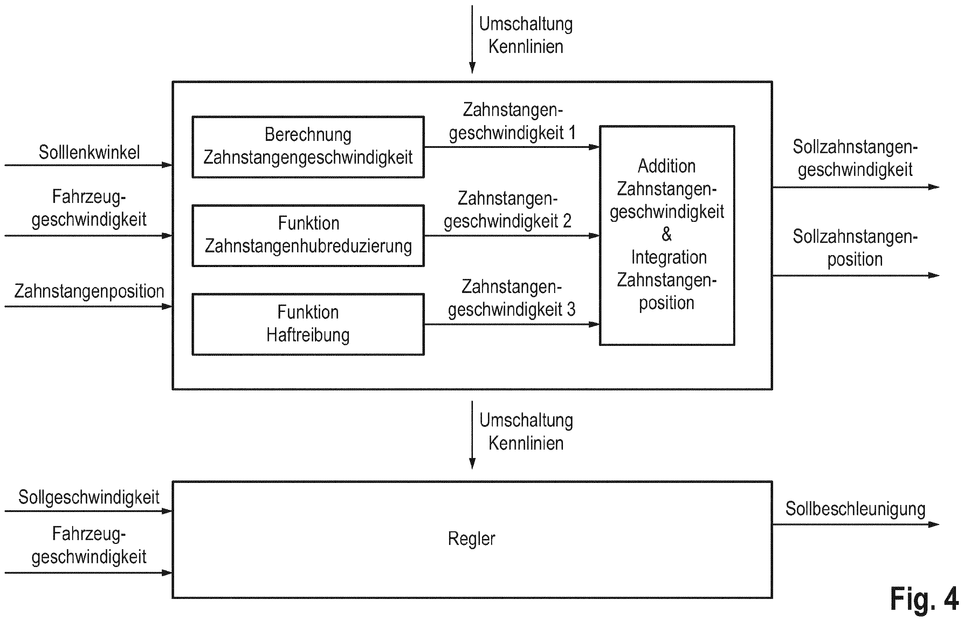

Gemäß der Erfindung ist die Befehlsübersetzungseinheit dazu ausgebildet, als Sollwerte der fahrzeugführungsrelevanten Fahrzeugparameter eine Solllängsbeschleunigung des Fahrzeugs sowie eine Sollzahnstangenposition und eine Sollzahnstangengeschwindigkeit eines Lenkgetriebes des Fahrzeugs zu ermitteln (vgl. Fig. 4).

Insbesondere kann bei dieser Ausführungsform die Befehlsübersetzungseinheit dazu ausgebildet sein, die Sollzahnstangengeschwindigkeit als eine Summe folgender Summanden zu ermitteln:
- einer ersten Sollzahnstangengeschwindigkeit, die proportional zu einer entsprechenden Vorgabe zur Fahrzeugquerführung gemäß einer zugehörigen Kennlinie bestimmt wird,
- einer zweiten Sollzahnstangengeschwindigkeit, die abhängig von als fahrbetriebsrelevante Fahrzeugdaten empfangenen aktuellen Fahrzeuggeschwindigkeit und Zahnstangenposition gemäß einer zugehörigen weiteren Kennlinie zur Hubreduzierung bestimmt wird, und/oder
- einer dritten Sollzahnstangengeschwindigkeit, die abhängig von einer als fahrbetriebsrelevante Fahrzeugdaten empfangenen aktuellen Fahrzeuggeschwindigkeit gemäß einer zugehörigen weiteren Kennlinie zur Simulation einer Haftreibung bestimmt wird.

Die Befehlsübersetzungseinheit ist dabei dazu eingerichtet, aus der so ermittelten Sollzahnstangengeschwindigkeit durch Bildung eines Integrals über die Zeit auch die Sollzahnstangenposition zu ermitteln.

Gemäß einer Ausführungsform weist die Befehlsübersetzungseinheit (bei der ersten Variante) bzw. die Übertragungseinheit (bei der zweiten Variante) mindestens eine Sicherheitseinrichtung auf, die dazu ausgebildet ist, als Voraussetzung der Übermittlung von Botschaften über deren drahtgebundene Kommunikationsschnittstelle an das fahrzeugeigene Kommunikationssystem einen Missbrauchsschutzvorgang, beispielsweise einen Benutzer-Authentifizierungsvorgang oder einen Benutzer-Autorisierungsvorgang, durchzuführen. Idealerweise ist dabei eine doppelte oder mehrfache Authentifizierung/Autorisierung implementiert, die jeden Kommunikationskanal - d. h. die oben erwähnte drahtlose und zusätzlich auch die drahtgebundene Signalübermittlung - vor Missbrauch schützt. Dabei können beispielsweise auch zwei oder mehr technisch verschiedene Authentifizierungs- bzw. Autorisierungsmethoden zum Einsatz kommen, die beispielsweise auf optischer und/oder akustischer Benutzererkennung und/oder auf einer Signatur- oder Passwortprüfung basieren können, um das Sicherheitsniveau zusätzlich zu steigern.

Das Fahrzeugführungssystem der hierin dargelegten Art kann ferner auch das fahrerlos steuerbare Fahrzeug selbst umfassen. Das Fahrzeug ist zum fahrerlosen Fahren ausgebildet und kann insbesondere ohne Lenkrad und ohne zur Fahrzeugführung geeignete Pedale ausgebildet sein. Es kann sich dabei nicht nur um ein Kraftfahrzeug, sondern auch um ein beliebiges anderes Land-, Luft- oder Wasserfahrzeug handeln.

Das Fahrzeug weist das hierin genannte fahrzeugeigene Kommunikationssystem auf, in welchem die genannten integrierten Steuergeräte und Sensoren des Fahrzeugs angebunden sind. Es umfasst auch die hierin genannte genormte (d. h. fahrzeugart- und modellübergreifend standardisierte) drahtgebundene Schnittstelle des fahrzeugeigenen Kommunikationssystems, die zum Übermitteln von Botschaften an die integrierten Steuergeräte des Fahrzeugs und zum Empfangen bestimmter fahrbetriebsrelevanter Fahrzeugdaten von den integrierten Sensoren und Steuergeräten des Fahrzeugs durch die angeschlossenen Geräte (d. h. Befehlsübersetzungseinheit bzw. Übertragungseinheit) ausgebildet ist.

Insbesondere kann die Fernsteuereinheit als ein mobiles Gerät zur Bedienung von innerhalb oder außerhalb des Fahrzeugs ausgebildet sein, während die mit der drahtgebundenen Kommunikationsschnittstelle ausgestattete Befehlsübersetzungseinheit (bei der ersten Variante der Erfindung) bzw. Übertragungseinheit (bei der zweiten Variante der Erfindung) im Fahrzeug angeordnet ist und über die genormte drahtgebundene Schnittstelle des fahrzeugeigenen Kommunikationssystems an diesem angeschlossen ist.

### Kurzbeschreibung der Zeichnungen

Oben beschriebene Ausführungsformen und Ausgestaltungsvarianten werden nachfolgend anhand der in beigefügten Zeichnungen dargestellten Beispiele näher erläutert. Die Zeichnungen sind rein schematisch, sie sind insbesondere nicht als maßstabsgetreu zu verstehen. Gleiche oder entsprechende Elemente tragen in den Zeichnungen gleiche Bezugszeichen. Es zeigen:
- Figur 1: ein Blockdiagramm eines Fahrzeugführungssystems der hierin dargelegten Art gemäß einer ersten Variante;
- Figur 2: ein Blockdiagramm eines Fahrzeugführungssystems der hierin dargelegten Art gemäß einer zu Fig. 1 alternativen zweiten Variante;
- Figur 3: ein Beispiel einer Benutzeroberfläche einer Fernsteuereinheit des Fahrzeugführungssystems der Fig. 1 oder 2 in Draufsicht; und
- Figur 4: ein Flussdiagramm eines Beispiels der Ermittlung von Sollwerten fahrzeugführungsrelevanter Fahrzeugparameter durch eine Befehlsübersetzungseinheit des Fahrzeugführungssystems der Fig. 1 oder 2.

### Beschreibung von Ausführungsformen

Fig. 1 zeigt in einem schematischen Blockdiagramm ein Fahrzeugführungssystem 1 der hierin dargelegten Art gemäß der weiter oben beschriebenen ersten Variante der Erfindung. Das Fahrzeugführungssystem 1 umfasst hierbei eine Fernsteuereinheit 2, eine Befehlsübersetzungseinheit 3 sowie in diesem Beispiel auch ein Fahrzeug 4, das in diesem Fall ein lenkrad- und pedalenloses Kraftfahrzeug ist. Das Fahrzeugführungssystem 1 kann jedoch auch ohne das Fahrzeug 4 hergestellt und vertrieben werden.

Das Fahrzeugführungssystem 1 ist dazu ausgebildet und eingerichtet, das Fahrzeug 4 über die Fernsteuereinheit 2 von einem Benutzer führen zu lassen, d. h. im Straßenverkehr oder auf einem Werkstattgelände in erforderlicher Weise zu steuern und zu bewegen. Bei der in Fig. 1 dargestellten ersten Variante kommuniziert die Fernsteuereinheit 2 hierzu drahtlos mit der Befehlsübersetzungseinheit 3 über zueinander kompatible drahtlose Kommunikationsschnittstellen K11 in der Fernsteuereinheit 2 und K12 in der Befehlsübersetzungseinheit 3, wie in der Figur durch entsprechende Wellenfronten der drahtlosen Signalübertragung angedeutet.

Die Befehlsübersetzungseinheit 3 kommuniziert zudem drahtgebunden (in der Figur durch einen Doppelpfeil angedeutet) mit einem fahrzeugeigenen Kommunikationssystem 5 über dessen im Fahrzeug 4 vorgesehene genormte drahtgebundene Schnittstelle K21, die in diesem Ausführungsbeispiel eine genormte On-Board-Diagnose-Schnittstelle, die sogenannte OBD-2-Schnittstelle ist. Hierzu weist die Befehlsübersetzungseinheit 3 eine entsprechend, d. h. kompatibel ausgebildete drahtgebundene Kommunikationsschnittstelle K22 auf. Über deren drahtgebundene Kommunikationsschnittstelle K22 gibt die Befehlsübersetzungseinheit 3 beim Betrieb des Fahrzeugführungssystems 1 Befehle zur Fahrzeugführung an das Fahrzeug 4 in Form von Botschaften aus, die für integrierte Steuergeräte des Fahrzeugs 4 bekannt, d. h. direkt umsetzbar sind. Das Fahrzeug 4 kann dabei in Längs- sowie in Querrichtung geführt werden.

Wie bereits erwähnt, kann beim vorliegenden Fahrzeugführungssystem 1 durch die Nutzung einer in aktuellen Fahrzeugen bereits vorhandenen und standardisierten OBD-2-Schnittstelle (oder einer vergleichbaren genormten drahtgebundenen Schnittstelle K21) der gesamte Entwicklungsaufwand erheblich reduziert werden, und ein zusätzlicher Aufwand zur Standardisierung, der für eine neue Schnittstelle zum fahrzeugeigenen Kommunikationssystem 5 erforderlich wäre, entfällt.

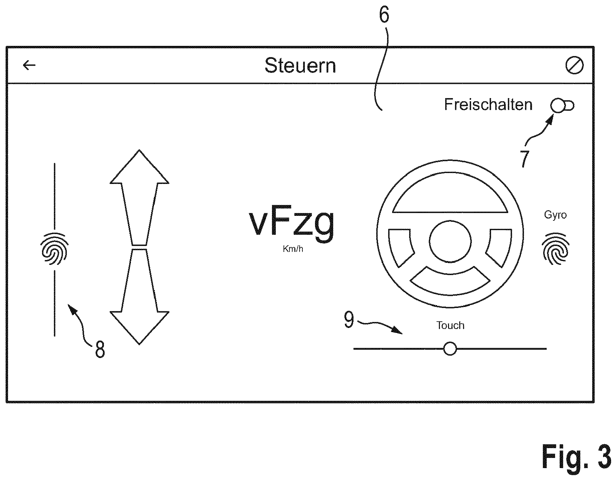

Nachfolgend werden die obigen Komponenten des Fahrzeugführungssystems 1 der Fig. 1 etwas detaillierter und mit Angabe einiger Ausgestaltungsbeispiele und eines möglichen Betriebsablaufs beschrieben:
Die Fernsteuereinheit 2 kann sich innerhalb oder außerhalb des Fahrzeugs 4 befinden. Dabei kann es sich um ein mobiles Gerät mit einer integrierten Recheneinheit handeln. Die Fernsteuereinheit 2 verfügt über die genannte drahtlose Kommunikationsschnittstelle K11. Dabei kann es sich beispielsweise um Wifi (WLAN), Bluetooth, NFC (Near-Field-Communication) oder weitere drahtlose Kommunikationsarten handeln. Weiterhin verfügt die Fernsteuereinheit 2 über eine Benutzeroberfläche 6 (vgl. Fig. 3), die zur Eingabe von Fahrzeugführungsvorgaben ausgebildet ist. Bei der Benutzeroberfläche 6 kann es sich beispielsweise um eine App oder ein Programm auf einem mobilen Gerät handeln. Ferner kann es sich dabei auch um ein Gamepad, Joystick oder Ähnliches handeln.

Mittels der Benutzeroberfläche 6 können Eingaben/Vorgaben zur Fahrzeuglängs- und/oder Fahrzeugquerführung vorgenommen werden. Die Fernsteuereinheit 2 ist über deren drahtlose Kommunikationsschnittstelle K11 mit der Befehlsübersetzungseinheit 3 verbunden und übermittelt beim Betrieb des Fahrzeugführungssystem 1 die Eingaben zur Fahrzeugführung an die Befehlsübersetzungseinheit 3.

Die Befehlsübersetzungseinheit 3 befindet sich beim Betrieb des Fahrzeugführungssystems 1 innerhalb des Fahrzeugs 4 (erste Variante der Erfindung). Es kann sich dabei um ein Steuergerät mit einer integrierten Recheneinheit handeln. Die Befehlsübersetzungseinheit 3 verfügt einerseits über die oben genannte drahtlose Kommunikationsschnittstelle K12. Dabei kann es sich wiederum um Wifi (WLAN), Bluetooth, NFC oder weiter drahtlose Kommunikationsarten handeln. Ferner verfügt die Befehlsübersetzungseinheit 3 auch über die oben genannte drahtgebundene Kommunikationsschnittstelle K22. Dabei handelt es sich in diesem Beispiel um eine zur OBD-2-Schnittstelle des Fahrzeugs 4 kompatible Schnittstelle.

Beim Betrieb des Fahrzeugführungssystems 1 ist die Befehlsübersetzungseinheit 3 über deren drahtlose Kommunikationsschnittstelle K12 mit der Fernsteuereinheit 2 verbunden und empfängt von dieser die Vorgaben des Benutzers zu Fahrzeugführung. Aus den empfangenen Vorgaben ermittelt die Befehlsübersetzungseinheit 3 beispielsweise eine Sollbeschleunigung für die Längsbewegung des Fahrzeugs 4 und eine Sollzahnstangenposition bzw. Sollzahnstangengeschwindigkeit für das Lenkgetriebe des Fahrzeugs 4 (vgl. Fig. 4). Auf dieser Basis erzeugt die Befehlsübersetzungseinheit 3 nun Botschaften, welche den integrierten Steuergeräten des Fahrzeugs 4 zur Bedienung der entsprechenden Fahrzeugaktuatoren bekannt sind. Dabei kann es sich um Botschaften einer CAN-Kommunikation oder weitere Botschaften in einem Fahrzeugbussystem handeln.

Ferner ist die Befehlsübersetzungseinheit 3 über deren drahtgebundene Kommunikationsschnittstelle K22 mit dem Fahrzeug 4 verbunden und leitet die erzeugten Botschaften an das Fahrzeugkommunikationssystem 5 weiter. Außerdem empfängt die Befehlsübersetzungseinheit 3 über deren drahtgebundene Kommunikationsschnittstelle K22 in diesem Beispiel auch fahrbetriebsrelevante Daten, welche bei der Ermittlung der Sollbeschleunigung und der Sollzahnstangenposition bzw. Sollzahnstangengeschwindigkeit genutzt werden. Die Befehlsübersetzungseinheit 3 kann ferner über geeignete Sicherheitsmaßnahmen verfügen, welche den Missbrauch der Fernsteuerung verhindern sollen.

Beim Fahrzeug 4 kann es sich um ein fahrerloses Fahrzeug handeln. Das Fahrzeug 4 verfügt über eine genormte drahtgebundene Kommunikationsschnittstelle K21. Dabei handelt es sich um die oben genannte OBD-2-Schnittstelle. Beim Betrieb des Fahrzeugführungssystems 1 ist das Fahrzeug 4 über seine drahtgebundene Kommunikationsschnittstelle K21 mit der Befehlsübersetzungseinheit 3 verbunden und empfängt von ihr dadurch entsprechende Botschaften. Die Botschaften werden an die entsprechenden Steuergeräte weitergeleitet, da diese ebenfalls im Fahrzeugkommunikationssystem 5 angebunden sind. Durch die empfangenen Botschaften werden die benötigten Aktuatoren zur Fahrzeugsteuerung zur Aktion veranlasst.

Die Eingabemöglichkeiten zur Fahrzeugfernsteuerung können beispielsweise über eine als Gamepad ausgebildete Fernsteuereinheit 2 realisiert sein. Zur Aktivierung wie auch Deaktivierung der Fahrzeugsteuerung kann beispielsweise eine Taste betätigt werden. Es kann sich dabei um dieselbe Taste oder um unterschiedliche Tasten für die Aktivierung und Deaktivierung handeln. Die Lenkvorgabe kann beispielsweise über Pfeiltasten oder einen analogen Stick erfolgen. Weiterhin kann die Beschleunigungsvorgabe, die Geschwindigkeitsvorgabe und/oder die Bremsvorgabe über einen analogen Stick, über analoge Schultertasten oder über anderweitige Tasten auf dem Gamepad erfolgen. Über weitere Tasten oder Taster können auch die Kennlinien zur Ermittlung zugehöriger Sollwerte aus der Beschleunigungs-/Brems- und Lenkvorgabevorgabe variiert werden, so dass dem Benutzer ein agileres Lenken oder stärkeres Beschleunigen ermöglicht wird. Ebenfalls kann die Steuervorgabe über einen Joystick erfolgen, wobei beispielsweise Links- und Rechtsbewegungen des Joysticks für Lenkvorgaben eingerichtet sein können, während Hoch- und Runterbewegungen des Joysticks als Beschleunigungs- und Bremsvorgaben dienen können. Ferner ist eine Steuervorgabe über ein Touchdisplay möglich.

So zeigt Fig. 3 eine Variante zur Steuerung des Fahrzeugs 4 per Display. Dargestellt ist in Draufsicht eine als Touchdisplay ausgebildete Benutzeroberfläche 6 der Fernsteuereinheit 2. Über einen Schiebetaster 7 kann die Steuerung aktiviert und deaktiviert werden. Die Beschleunigungs-/Brems- und Lenkvorgabevorgaben können per Schieberegler 8 bzw. 9 erflogen, wobei die jeweilige Bedeutung dem Benutzer symbolisch als Pfeile bzw. als ein Lenkrad im Display dargestellt wird. Außerdem kann die Lenkvorgabe durch das Drehen des Geräts (d. h. der Fernsteuereinheit 2) um seine eigene Achse realisiert sein (mittels geeigneter Gyrometer etc.). Diese Funktion ist in diesem Beispiel durch das Berühren des eingezeichneten Felds mit der Überschrift "Gyro" in der Benutzeroberfläche 6 aktivierbar.

Der Benutzer bekommt in Fig. 3 auch fahrbetriebsrelevante Informationen (Fahrzeugdaten) angezeigt, die die Fernsteuereinheit 2 von der Befehlsübersetzungseinheit 3, und diese von dem Fahrzeug 4 im Betrieb übermittelt bekommt. Dazu können die Fahrzeuggeschwindigkeit, die Gangwahl und Ähnliches gehören. So wird dem Benutzer in Fig. 3 in einem Feld "vFzg" in der Mitte der Benutzeroberfläche 6 die aktuelle Fahrzeuggeschwindigkeit in km/h angezeigt. Ferner kann ein virtueller Lenkwinkel, welcher Auskunft über die Radstellung gibt, angezeigt werden, beispielsweise durch eine entsprechend gedrehte Darstellung des Lenkrads (rechts in der Displayfläche der Fig. 3).

Fig. 4 zeigt in einem schematischen Flussdiagramm die in der Befehlsübersetzungseinheit 3 der Fig. 1 implementierte Ermittlung der Sollbeschleunigung und Sollzahnstangenposition bzw. Sollzahnstangengeschwindigkeit aus den benutzerseitigen Vorgaben der Fahrzeugführung einerseits und aus den vom Fahrzeug 4 erhaltenen aktuellen Fahrzeugdaten andererseits. Bei den fahrbetriebsrelevanten Daten kann es sich um die Fahrzeuggeschwindigkeit, Zahnstangenposition, Gangwahl, Kameradaten oder weitere Daten, welche durch die Sensorik des Fahrzeugs 4 erfasst werden, handeln.

Wie in dem unteren Teil der Fig. 4 dargestellt, wird aus der Vorgabe der Fahrzeuglängsführung sowie der aktuellen Fahrzeuggeschwindigkeit mittels einer zugehörigen Kennlinie eine Sollbeschleunigung ermittelt, so dass eine konstante Geschwindigkeit unabhängig von der Fahrbahneigenschaft (Steigung oder Gefälle etc.) über die Fernsteuereinheit 2 eingeregelt werden kann. Diese Kennlinie ist in diesem Beispiel über die Fernsteuereinheit 2 umschaltbar. Dadurch kann die erreichbare Maximalgeschwindigkeit je na Anforderungslage variiert werden.

Wie in dem oberen Teil der Fig. 4 dargestellt, wird ferner aus der Vorgabe zur Fahrzeugquerführung erstens proportional mittels einer zugehörigen umschaltbaren Kennlinie eine Soll-Zahnstangengeschwindigkeit 1 ermittelt (in Fig. 4 kurz Zahnstangengeschwindigkeit 1 genannt). Zweitens wird aus der aktuellen Fahrzeuggeschwindigkeit und der aktuellen Zahnstangenposition mittels einer weiteren umschaltbaren Kennlinie eine Soll-Zahnstangengeschwindigkeit 2 (in Fig. 4 kurz Zahnstangengeschwindigkeit 2 genannt) ermittelt. Die Ermittlung der Zahnstangengeschwindigkeit 2 ist zur Hubreduzierung vorgesehen. Die Zahnstangenhubreduzierung kann dabei wie folgt der Fahrsicherheit dienen: Bei höheren Geschwindigkeiten soll die ermittelte Zahnstangengeschwindigkeit 2 die Wirkung haben, dass ungewollte, extrem schnelle und große Zahnstangenhubbewegungen, welche durch die Bedienung eines herkömmlichen Lenkrades nicht möglich wären, ausgeschlossen/vermieden werden. Drittens wird anhand der aktuellen Fahrzeuggeschwindigkeit eine Soll-Zahnstangengeschwindigkeit 3 berechnet (in Fig. 4 kurz Zahnstangengeschwindigkeit 3 genannt). Die Zahnstangengeschwindigkeit 3 dient zur Simulation einer Haftreibung. Bei stillstehendem Fahrzeug (d. h. einer als fahrbetriebsrelevante Fahrzeugdaten übermittelten Fahrzeuggeschwindigkeit von ca. 0 km/h) soll diese Haftreibung minimale bis kleine Fahrzeugquerführungsvorgaben unterdrücken, die durch Signalrauschen und Ähnliches entstehen können und ohne diese Maßnahme zu einer permanenten Zahnstangenbewegung bei Fahrzeugstillstand führen würden.

Wie in Fig. 4 dargestellt, werden in diesem Beispiel die Soll-Zahnstangengeschwindigkeit 1, die Soll-Zahnstangengeschwindigkeit 2 und die Soll-Zahnstangengeschwindigkeit 3 addiert, woraus die auszugebende Sollzahnstangengeschwindigkeit resultiert. Aus der Sollzahnstangengeschwindigkeit wird zudem das Integral gebildet, so dass daraus die auszugebende Sollzahnstangeposition resultiert.

Die Befehlsübersetzungseinheit 3 der Fig. 1 erzeugt ausgehend von den so ermittelten Sollwerten Kommunikationsbotschaften und leitet diese an das interne Fahrzeugkommunikationssystem 5 des Fahrzeugs 4 über ihre drahtgebundene Kommunikationsschnittstelle K22 weiter. Die jeweilige Botschaft kann beispielsweise inhaltlich mit der Sollbeschleunigung und der Sollzahnstangenposition und/oder Sollzahnstangengeschwindigkeit gefüllt sein. Außerdem erhält die Befehlsübersetzungseinheit 3 über deren drahtgebundene Kommunikationsschnittstelle K22 auch ihrerseits Kommunikationsbotschaften vom Fahrzeugkommunikationssystem 5, die fahrbetriebsrelevante Fahrzeugdaten wie die Fahrzeuggeschwindigkeit und die Zahnstangenposition enthalten.

Die an das Fahrzeug 4 übermittelten Botschaften verfügen in diesem Beispiel über jeweils zwei Signale zur Übermittlung von zwei Werten (hier den ermittelten Sollwerten) sowie jeweils zwei Adressen zur Zuordnung dieser Werte zu der jeweiligen Größe (hier zu der Adressierung des zugehörigen Fahrzeugaktuators). Bei Aktivierung einer kontinuierlichen Fernsteuerung mittels eines entsprechenden Inhalts einer an das Fahrzeug 4 übermittelten Botschaft sowie einer Bestätigung durch eine von dem Fahrzeug 4 erhaltenen Botschaft haben beide Botschaften in diesem Beispiel eine vorbestimmte Zykluszeit von beispielsweise etwa 1 ms. Dadurch, wie auch durch die Beschränkung der Anzahl jeweils übermittelter Werte auf zwei (oder drei), kann eine flüssige Fahrzeugsteuerung und Bewegung gewährleistet und eine Busüberlastung des Fahrzeugkommunikationssystems 5 vermieden werden. Integrierte Steuergeräte des Fahrzeugs werden dabei in regelmäßigen Zeitabständen entsprechend der Zykluszeit mit den zugehörigen Instruktionen/Botschaften versorgt. Alternativ kann das Aussenden der Botschaften auch ereignisgesteuert sein, so dass die Botschaften über die drahtgebundene Kommunikationsschnittstelle K22 der Befehlsübersetzungseinheit 3 in beide Richtungen nur dann gesendet werden, wenn eine entsprechende Eingabe durch den Benutzer über die Fernsteuereinheit 2 erfolgt ist.

Fig. 2 zeigt in einem zu Fig. 1 alternativen Blockdiagramm eine weitere Konzeptdarstellung der Erfindung, die hierin als die zweite Variante des Fahrzeugführungssystems 1 bezeichnet wird. Im Unterschied zum Systemaufbau gemäß Fig. 1 beinhaltet die Fernsteuereinheit 2 in Fig. 2 auch die Funktion der Befehlsübersetzungseinheit 3, die Sollwerte wie Sollbeschleunigung und Sollzahnstangenposition bzw. Sollzahnstangengeschwindigkeit ermittelt und drahtlos über ihre drahtlose Kommunikationsschnittstelle K11 an eine Übertragungseinheit 10 übermittelt. Die Übertragungseinheit 10, die hierzu mit einer zur drahtlosen Kommunikationsschnittstelle K11 der Fernsteuereinheit 2 kompatiblen drahtlosen Kommunikationsschnittstelle K13 einerseits und mit einer zur genormten drahtgebundenen Schnittstelle K21 des fahrzeugeigenen Kommunikationssystems 5 (in diesem Beispiel zur OBD-2-Schnittstelle) kompatiblen drahtgebundenen Kommunikationsschnittstelle K23 andererseits ausgestattet ist, erstellt aus den empfangenen Sollwerten die entsprechenden Botschaften zur Fahrzeugkommunikation und sendet diese über die OBD-2-Schnittstelle an das fahrzeugeigene Kommunikationssystem 5 weiter. Im Übrigen gilt hier alles weiter oben in Bezug auf die erste Variante gemäß Fig. 1 Gesagte entsprechend.

Das Konzept gemäß der ersten Variante (Fig. 1) kann je nach Anwendung im Vergleich zu der zweiten Variante (Fig. 2) beispielsweise den Vorteil haben, dass die Bedienung in Form von Eingaben zur Fahrzeugführung über grundsätzlich jedes mobile Gerät oder Gamepad oder Ähnliches ermöglicht werden kann, sofern es über ausreichende Eingabemöglichkeiten wie Taster, Sticks oder ein Touchdisplay verfügt. Mittels einer entsprechenden App kann in diesem Fall eine geeignete Verbindung zur Befehlsübersetzungseinheit 3 der Fig. 1 herstellbar sein. Beispielsweise kann ein Servicemitarbeiter eine entsprechende App auf sein Smartphone laden (sodass sein Smartphone dadurch zu der Fernsteuereinheit 2 im Sinne der Fig. 1 wird) und durch eine Verbindung zur Befehlsübersetzungseinheit 3 das Fahrzeug 4 fernsteuern.

Durch die Verwendung von nur zwei Botschaften (d. h. zum Fahrzeug 4 und vom Fahrzeug 4) und gegebenenfalls durch eine Begrenzung auf eine vorgegebene maximale Anzahl von übermittelten Sollwerten pro Botschaft (beispielswiese nur zwei bis drei oder vier Werte samt zugehöriger Adressen pro Botschaft) kann die Buslast des fahrzeugeigenen Kommunikationssystem 5 minimiert werden. Außerdem kann dabei durch den flexiblen Signalinhalt die Signalauflösung maximiert werden.

### Bezugszeichenliste

- 1.: Fahrzeugführungssystem
- 2.: Fernsteuereinheit
- 3.: Befehlsübersetzungseinheit
- 4.: Fahrzeug
- 5.: fahrzeugeigenes, d. h. internes Kommunikationssystem; auch kurz Fahrzeugkommunikationssystem genannt
- 6.: Benutzeroberfläche der Fernsteuereinheit
- 7.: Schiebetaster zur Aktivierung der Fernsteuerung
- 8.: Schieberegler zur Beschleunigungsvorgabe
- 9.: Schieberegler zur Lenkvorgabevorgabe
- 10.: Übertragungseinheit
- K11.: drahtlose Kommunikationsschnittstelle der Fernsteuereinheit
- K12.: drahtlose Kommunikationsschnittstelle der Befehlsübersetzungseinheit
- K13.: drahtlose Kommunikationsschnittstelle der Übertragungseinheit
- K21.: genormte drahtgebundene Schnittstelle des fahrzeugeigenen Kommunikationssystems, insbesondere OBD-2-Schnittstelle
- K22.: drahtgebundene Kommunikationsschnittstelle der Befehlsübersetzungseinheit
- K23.: drahtgebundene Kommunikationsschnittstelle der Übertragungseinheit

## Patentansprüche

1. Fahrzeugführungssystem (1) für ein fahrerlos steuerbares Fahrzeug (4), wobei das Fahrzeugführungssystem (1) umfasst:
- eine Fernsteuereinheit (2) mit einer Benutzeroberfläche (6), die zur Eingabe von Fahrzeugführungsvorgaben ausgebildet ist, die eine oder mehrere Vorgaben zur Fahrzeuglängsführung, insbesondere zu einer Geschwindigkeit und/oder Beschleunigung des Fahrzeugs (4), und/oder zur Fahrzeugquerführung, insbesondere zu einem Lenkwinkel und/oder einer Lenkwinkelgeschwindigkeit, umfassen; und
- eine Befehlsübersetzungseinheit (3), die dazu ausgebildet ist, die eingegebenen Fahrzeugführungsvorgaben zu erhalten, abhängig davon Sollwerte mindestens eines fahrzeugführungsrelevanten Fahrzeugparameters zu ermitteln, entsprechende Botschaften, die integrierten Steuergeräten des Fahrzeugs (4) zur Ansteuerung entsprechender Fahrzeugaktuatoren bekannt sind, zu erzeugen und an die integrierten Steuergeräte des Fahrzeugs (4) zu übermitteln,
wobei die Befehlsübersetzungseinheit (3) zum Übermitteln der erzeugten Botschaften an die integrierten Steuergeräte des Fahrzeugs (4) eine für verschiedene Modelle, Hersteller und/oder Fahrzeugarten einheitlichen drahtgebundene Kommunikationsschnittstelle (K22) aufweist, die zum Anschließen an eine genormte drahtgebundene Schnittstelle (K21) eines fahrzeugeigenen Kommunikationssystems (5) ausgebildet ist, in welchem diese Steuergeräte angebunden sind,
wobei die genormte drahtgebundene Schnittstelle (K21) des fahrzeugeigenen Kommunikationssystems (5) eine zur On-Board-Diagnose ausgebildete Schnittstelle, insbesondere eine OBD-2-Schnittstelle, ist,
**dadurch gekennzeichnet, dass** die Befehlsübersetzungseinheit (3) dazu ausgebildet ist, als Sollwerte der fahrzeugführungsrelevanten Fahrzeugparameter eine Solllängsbeschleunigung des Fahrzeugs (4) sowie eine Sollzahnstangenposition und eine Sollzahnstangengeschwindigkeit eines Lenkgetriebes des Fahrzeugs (4) zu ermitteln.

2. Fahrzeugführungssystem (1) nach Anspruch 1, wobei
- die Befehlsübersetzungseinheit (3) als eine von der Fernsteuereinheit (2) räumlich getrennte, kompakte Baugruppe ausgebildet ist;
- die Fernsteuereinheit (2) zum drahtlosen Übermitteln der eingegebenen Fahrzeugführungsvorgaben an die Befehlsübersetzungseinheit (3) ausgebildet ist und hierzu eine drahtlose Kommunikationsschnittstelle (K11) aufweist;
- die Befehlsübersetzungseinheit (3) zum drahtlosen Empfangen der eingegebenen Fahrzeugführungsvorgaben von der Fernsteuereinheit (2) ausgebildet ist und hierzu eine zur drahtlosen Kommunikationsschnittstelle (K11) der Fernsteuereinheit (2) kompatible drahtlose Kommunikationsschnittstelle (K12) aufweist; und
- deren drahtgebundene Kommunikationsschnittstelle (K22) vorzugsweise zu einer lösbaren Verbindung mit der genormten drahtgebundenen Schnittstelle (K21) des fahrzeugeigenen Kommunikationssystems (5) ausgebildet ist.

3. Fahrzeugführungssystem (1) nach Anspruch 1,
- wobei eine Übertragungseinheit (10) vorgesehen ist, die dazu ausgebildet ist, die ermittelten Sollwerte zu erhalten, die entsprechenden Botschaften zu erzeugen und an die integrierten Steuergeräte des Fahrzeugs (4) zu übermitteln; wobei die Übertragungseinheit (10) zum Übermitteln der erzeugten Botschaften an die integrierten Steuergeräte des Fahrzeugs (4) die drahtgebundene Kommunikationsschnittstelle (K23) aufweist.

4. Fahrzeugführungssystem (1) nach Anspruch 3, wobei
- die Befehlsübersetzungseinheit (3) in der Fernsteuereinheit (2) integriert ist;
- die Fernsteuereinheit (2) zum drahtlosen Übermitteln der von der Befehlsübersetzungseinheit (3) ermittelten Sollwerte an die Übertragungseinheit (10) ausgebildet ist und hierzu eine drahtlose Kommunikationsschnittstelle (K11) aufweist;
- die Übertragungseinheit (10) von der Fernsteuereinheit (2) räumlich getrennt ist, zum drahtlosen Empfangen der ermittelten Sollwerte von dieser ausgebildet ist und hierzu eine zur drahtlosen Kommunikationsschnittstelle (K11) der Fernsteuereinheit (2) kompatible drahtlose Kommunikationsschnittstelle (K13) aufweist; und
- deren drahtgebundene Kommunikationsschnittstelle (K23) vorzugsweise zu einer lösbaren Verbindung mit der genormten drahtgebundenen Schnittstelle (K21) des fahrzeugeigenen Kommunikationssystems (5) ausgebildet ist.

5. Fahrzeugführungssystem (1) nach einem der vorhergehenden Ansprüche, wobei
- die Befehlsübersetzungseinheit (3) ferner dazu ausgebildet ist, über die genormte drahtgebundene Schnittstelle (K21) des fahrzeugeigenen Kommunikationssystems (5) bestimmte fahrbetriebsrelevante Fahrzeugdaten von integrierten Sensoren des Fahrzeugs (4), die im fahrzeugeigenen Kommunikationssystem (5) angebunden sind, und/oder von den integrierten Steuergeräten des Fahrzeugs (4) zu empfangen;
- die Befehlsübersetzungseinheit (3) dazu ausgebildet ist, die Sollwerte der Fahrzeugparameter auch abhängig von den empfangenen fahrbetriebsrelevanten Fahrzeugdaten zu ermitteln; und
- die Fernsteuereinheit (2) dazu ausgebildet ist, zumindest einige dieser fahrbetriebsrelevanten Fahrzeugdaten dem Benutzer in der Benutzeroberfläche (6) anzuzeigen.

6. Fahrzeugführungssystem (1) nach einem der vorhergehenden Ansprüche, wobei
- die Befehlsübersetzungseinheit (3) dazu ausgebildet ist, die Sollwerte mindestens eines der Fahrzeugparameter jeweils anhand einer von mehreren untereinander umschaltbaren Kennlinien zu ermitteln; und
- diese Kennlinien über die Benutzeroberfläche (6) der Fernsteuereinheit (2) umschaltbar sind.

7. Fahrzeugführungssystem (1) nach einem der vorhergehenden Ansprüche, wobei
- die Befehlsübersetzungseinheit (3) und gegebenenfalls die Übertragungseinheit (10) dazu ausgebildet sind, das Erzeugen und Übermitteln der Botschaften an die integrierten Steuergeräte des Fahrzeugs (4) periodisch mit einer vorbestimmten Zykluszeit von beispielsweise etwa 1 ms durchzuführen,
- wobei die beim jeweiligen Zyklus erzeugte und über das fahrzeugeigene Kommunikationssystem (5) übermittelte Botschaft auf eine vorbestimmte Anzahl von Sollwerten unterschiedlicher Fahrzeugparameter beschränkt ist, welche Anzahl insbesondere zwei, vorzugsweise drei beträgt.

8. Fahrzeugführungssystem (1) nach Anspruch 6, wobei die Befehlsübersetzungseinheit (3) dazu ausgebildet ist, die Sollzahnstangengeschwindigkeit als eine Summe zu ermitteln aus
- einer ersten Sollzahnstangengeschwindigkeit, die proportional zu einer entsprechenden Vorgabe zur Fahrzeugquerführung gemäß einer zugehörigen Kennlinie bestimmt wird, sowie
- einer zweiten Sollzahnstangengeschwindigkeit, die abhängig von als fahrbetriebsrelevante Fahrzeugdaten empfangenen aktuellen Fahrzeuggeschwindigkeit und Zahnstangenposition gemäß einer zur Hubreduzierung vorbestimmten weiteren Kennlinie bestimmt wird, und/oder
- einer dritten Sollzahnstangengeschwindigkeit, die abhängig von einer als fahrbetriebsrelevante Fahrzeugdaten empfangenen aktuellen Fahrzeuggeschwindigkeit gemäß einer zur Simulation einer Haftreibung vorbestimmten weiteren Kennlinie bestimmt wird.

9. Fahrzeugführungssystem (1) nach einem der vorhergehenden Ansprüche, wobei
- die Befehlsübersetzungseinheit (3) bzw. die Übertragungseinheit (10) mindestens eine Sicherheitseinrichtung aufweist, die dazu ausgebildet ist, als Voraussetzung der Übermittlung von Botschaften über deren drahtgebundene Kommunikationsschnittstelle (K22; K23) an das fahrzeugeigene Kommunikationssystem (5) einen Missbrauchsschutzvorgang, insbesondere einen Benutzer-Authentifizierungs- oder Autorisierungsvorgang, durchzuführen.

10. Fahrzeugführungssystem (1) nach einem der vorhergehenden Ansprüche, ferner umfassend ein fahrerlos steuerbares Fahrzeug (4), das Folgendes aufweist:
- ein fahrzeugeigenes Kommunikationssystem (5), in welchem die genannten integrierten Steuergeräte und Sensoren des Fahrzeugs (4) angebunden sind; und
- die genannte genormte drahtgebundene Schnittstelle (K21) des fahrzeugeigenen Kommunikationssystems (5), die zum Übermitteln von Botschaften an die integrierten Steuergeräte des Fahrzeugs (4) und zum Empfangen bestimmter fahrbetriebsrelevanter Fahrzeugdaten von den integrierten Sensoren und Steuergeräten des Fahrzeugs (4) ausgebildet ist.

11. Fahrzeugführungssystem (1) nach Anspruch 10, wobei
- das Fahrzeug (4) ein lenkrad- und pedalenloses Fahrzeug ist.

12. Fahrzeugführungssystem (1) nach Anspruch 10 oder 11, bei dem
- die Fernsteuereinheit (2) als ein mobiles Gerät zur Bedienung innerhalb oder außerhalb des Fahrzeugs (4) ausgebildet ist; und
- die mit der drahtgebundenen Kommunikationsschnittstelle (K22; K23) ausgestattete Befehlsübersetzungseinheit (3) bzw. Übertragungseinheit (10) im Fahrzeug (4) angeordnet ist und über die genormte drahtgebundene Schnittstelle (K21) des fahrzeugeigenen Kommunikationssystems (5) an diesem angeschlossen ist.

## Claims

1. A vehicle guidance system (1) for a driverless vehicle (4), wherein the vehicle guidance system (1) comprises:
- a remote control unit (2) with a user interface (6), which is designed to input vehicle guidance specifications that comprise one or more specifications for longitudinal guidance of the vehicle, in particular for a speed and/or acceleration of the vehicle (4), and/or for transverse guidance of the vehicle, in particular for a steering angle and/or a steering angle speed; and
- a command translation unit (3), which is designed to receive the entered vehicle control specifications, to ascertain target values of at least one vehicle parameter relevant to vehicle control as a function of these specifications, to generate corresponding messages, which are known to the integrated control devices of the vehicle (4) for controlling corresponding vehicle actuators, and to transmit them to the integrated control devices of the vehicle (4),
wherein the command translation unit (3) has a wire-based communication interface (K22) that is standardized for various models, manufacturers and/or vehicle types for transmitting the generated messages to the integrated control devices of the vehicle (4), which interface is designed for connecting to a standardized wired interface (K21) of an on-board communication system (5), in which these control devices are connected, wherein the standardized wired interface (K21) of the on-board communication system (5) is an interface designed for on-board diagnosis, in particular an OBD-2 interface,
**characterized in that** the command translation unit (3) is designed to ascertain a target longitudinal acceleration of the vehicle (4) along with a target rack position and a target rack speed of a steering gear of the vehicle (4) as target values of the vehicle parameters relevant to the guidance of the vehicle.

2. The vehicle guidance system (1) according to claim 1, wherein
- the command translation unit (3) is designed as a compact assembly spatially separated from the remote control unit (2);
- the remote control unit (2) is designed for wireless transmission of the entered vehicle guidance instructions to the command translation unit (3) and for this purpose has a wireless communication interface (K11);
- the command translation unit (3) is designed for wirelessly receiving the entered vehicle guidance instructions from the remote control unit (2) and for this purpose has a wireless communication interface (K12) compatible with the wireless communication interface (K11) of the remote control unit (2); and
- the wired communication interface (K22) of which is preferably designed for a detachable connection to the standardized wired interface (K21) of the on-board communication system (5).

3. The vehicle guidance system (1) according to claim 1,
- wherein a transmission unit (10) is provided, which is designed to receive the ascertained target values, to generate the corresponding messages and to transmit them to the integrated control devices of the vehicle (4); wherein the transmission unit (10) has the wired communication interface (K23) for transmitting the generated messages to the integrated control devices of the vehicle (4).

4. The vehicle guidance system (1) according to claim 3, wherein
- the command translation unit (3) is integrated in the remote control unit (2);
- the remote control unit (2) is designed for wirelessly transmitting the target values ascertained by the command translation unit (3) to the transmission unit (10) and for this purpose has a wireless communication interface (K11);
- the transmission unit (10) is spatially separated from the remote control unit (2), is designed for wirelessly receiving the ascertained target values from the remote control unit (2) and for this purpose has a wireless communication interface (K13) compatible with the wireless communication interface (K11) of the remote control unit (2); and
- the wired communication interface (K23) of which is preferably designed for a detachable connection to the standardized wired interface (K21) of the on-board communication system (5).

5. The vehicle guidance system (1) according to one of the preceding claims, wherein
- the command translation unit (3) is also designed to receive, via the standardized wired interface (K21) of the on-board
communication system (5), certain vehicle data relevant to driving operations from integrated sensors of the vehicle (4), which are connected in the on-board
communication system (5), and/or from the integrated control devices of the vehicle (4);
- the command translation unit (3) is designed to ascertain the target values of the vehicle parameters depending as well on the received vehicle data relevant to driving operations; and
- the remote control unit (2) is designed to display at least some of these vehicle data relevant to driving operations to the user in the user interface (6).

6. The vehicle guidance system (1) according to one of the preceding claims, wherein
- the command translation unit (3) is designed to ascertain the target values of at least one of the vehicle parameters in each case based on one of a plurality of switchable characteristic curves; and
- these characteristic curves can be switched via the user interface (6) of the remote control unit (2).

7. The vehicle guidance system (1) according to one of the preceding claims, wherein
- the command translation unit (3) and, if applicable, the transmission unit (10) are designed to periodically generate and transmit the messages to the integrated control devices of the vehicle (4) at a predetermined cycle time of, for example, approximately 1 ms,
- wherein the message generated with the respective cycle and transmitted via the on-board communication system (5) is limited to a predetermined number of target values of different vehicle parameters, which number is in particular two, preferably three.

8. A vehicle guidance system (1) according to claim 6, wherein the command translation unit (3) is designed to ascertain the target rack speed as a sum of
- a first target rack speed, which is determined proportionally to a corresponding specification for the vehicle lateral guidance according to an associated characteristic curve, and
- a second target rack speed, which is determined depending on the current vehicle speed and rack position received as vehicle data relevant to driving operations according to a further characteristic curve predetermined for stroke reduction, and/or
- a third target rack speed, which is determined depending on a current vehicle speed received as vehicle data relevant to driving operations according to a further characteristic curve predetermined for simulating static friction.

9. The vehicle guidance system (1) according to one of the preceding claims, wherein
- the command translation unit (3) and the transmission unit (10) have at least one security device, which is designed to carry out an anti-misuse process, in particular a user authentication or authorization process, as a prerequisite for the transmission of messages to the on-board communication system (5) via its wired communication interface (K22; K23).

10. A vehicle guidance system (1) according to one of the preceding claims, further comprising a driverless controllable vehicle (4) that has the following:
- an on-board vehicle communication system (5), in which the specified integrated control devices and sensors of the vehicle (4) are connected; and
- the specified standardized wired interface (K21) of the in-vehicle communication system (5), which is designed to transmit messages to the integrated control devices of the vehicle (4) and to receive certain vehicle data relevant to driving operations from the integrated sensors and control devices of the vehicle (4).

11. The vehicle guidance system (1) according to claim 10, wherein
- the vehicle (4) is a vehicle without a steering wheel and pedals.

12. The vehicle guidance system (1) according to claim 10 or 11, in which
- the remote control unit (2) is designed as a mobile device for operation inside or outside the vehicle (4); and
- the command translation unit (3) or transmission unit (10) equipped with the wired communication interface (K22; K23) is arranged in the vehicle (4) and is connected to the on-board communication system (5) via the standardized wired interface (K21) of the on-board communication system (5).

## Revendications

1. Système de guidage de véhicule (1) pour un véhicule (4) pouvant être commandé sans conducteur, dans lequel le système de guidage de véhicule (1) comprend :
- une unité de commande à distance (2) comportant une interface utilisateur (6) qui est configurée pour l'entrée d'instructions de guidage de véhicule qui comprennent une ou plusieurs instructions pour le guidage longitudinal du véhicule, en particulier pour une vitesse et/ou une accélération du véhicule (4), et/ou pour le guidage transversal du véhicule, en particulier pour un angle de braquage et/ou une vitesse d'angle de braquage ; et
- une unité de traduction d'injonctions (3) qui est configurée pour obtenir les instructions de guidage de véhicule entrées, pour déterminer en fonction de celles-ci des valeurs de consigne d'au moins un paramètre de véhicule pertinent pour le guidage du véhicule, pour générer des messages correspondants qui sont connus d'appareils de commande intégrés du véhicule (4) pour la commande d'actionneurs de véhicule correspondants, et pour les transmettre aux appareils de commande intégrés du véhicule (4),
dans lequel l'unité de traduction d'injonctions (3) présente, pour la transmission des messages générés aux appareils de commande intégrés du véhicule (4), une interface de communication filaire (K22) uniforme pour différents modèles, fabricants et/ou types de véhicules, laquelle interface est configurée pour être raccordée à une interface filaire normalisée (K21) d'un système de communication propre au véhicule (5), dans lequel système de communication lesdits appareils de commande sont connectés, dans lequel l'interface filaire normalisée (K21) du système de communication propre au véhicule (5) est une interface configurée pour le diagnostic embarqué, en particulier une interface OBD-2,
**caractérisé en ce que** l'unité de traduction d'injonctions (3) est configurée pour déterminer, en tant que valeurs de consigne des paramètres de véhicule pertinents pour le guidage du véhicule, une accélération longitudinale de consigne du véhicule (4) ainsi qu'une position de crémaillère de consigne et une vitesse de crémaillère de consigne d'un mécanisme de direction du véhicule (4).

2. Système de guidage de véhicule (1) selon la revendication 1, dans lequel
- l'unité de traduction d'injonctions (3) est configurée en tant que module compact, séparé spatialement de l'unité de commande à distance (2) ;
- l'unité de commande à distance (2) est configurée pour transmettre sans fil les instructions de guidage de véhicule entrées à l'unité de traduction d'injonctions (3) et présente à cet effet une interface de communication sans fil (K11) ;
- l'unité de traduction d'injonctions (3) est configurée pour recevoir sans fil les instructions de guidage de véhicule entrées en provenance de l'unité de commande à distance (2) et présente à cet effet une interface de communication sans fil (K12) compatible avec l'interface de communication sans fil (K11) de l'unité de commande à distance (2) ; et
- dont l'interface de communication filaire (K22) est de préférence configurée pour être connectée de manière amovible à l'interface filaire normalisée (K21) du système de communication propre au véhicule (5).

3. Système de guidage de véhicule (1) selon la revendication 1,
- dans lequel une unité de transfert (10) est prévue, laquelle est configurée pour obtenir les valeurs de consigne déterminées, pour générer les messages correspondants et pour les transmettre aux appareils de commande intégrés du véhicule (4) ; dans lequel l'unité de transfert (10) présente l'interface de communication filaire (K23) pour la transmission des messages générés aux appareils de commande intégrés du véhicule (4).

4. Système de guidage de véhicule (1) selon la revendication 3, dans lequel
- l'unité de traduction d'injonctions (3) est intégrée dans l'unité de commande à distance (2) ;
- l'unité de commande à distance (2) est configurée pour transmettre sans fil à l'unité de transfert (10) les valeurs de consigne déterminées par l'unité de traduction d'injonctions (3) et présente à cet effet une interface de communication sans fil (K11) ;
- l'unité de transfert (10) est séparée spatialement de l'unité de commande à distance (2), est configurée pour recevoir sans fil les valeurs de consigne déterminées en provenance de ladite unité de commande à distance, et présente à cet effet une interface de communication sans fil (K13) compatible avec l'interface de communication sans fil (K11) de l'unité de commande à distance (2) ; et
- dont l'interface de communication filaire (K23) est de préférence configurée pour être connectée de manière amovible à l'interface filaire normalisée (K21) du système de communication propre au véhicule (5).

5. Système de guidage de véhicule (1) selon l'une des revendications précédentes, dans lequel
- l'unité de traduction d'injonctions (3) est en outre configurée pour recevoir, par l'intermédiaire de l'interface filaire normalisée (K21) du système de communication propre au véhicule (5), des données de véhicule pertinentes pour le fonctionnement de la conduite en provenance de capteurs intégrés du véhicule (4),
lesquels sont connectés dans le système de communication propre au véhicule (5), et/ou en provenance des appareils de commande intégrés du véhicule (4) ;
- l'unité de traduction d'injonctions (3) est configurée pour déterminer les valeurs de consigne des paramètres de véhicule également en fonction des données de véhicule pertinentes pour le fonctionnement de la conduite reçues ; et
- l'unité de commande à distance (2) est configurée pour afficher au moins certaines desdites données de véhicule pertinentes pour le fonctionnement de la conduite à l'utilisateur dans l'interface utilisateur (6).

6. Système de guidage de véhicule (1) selon l'une des revendications précédentes, dans lequel
- l'unité de traduction d'injonctions (3) est configurée pour déterminer les valeurs de consigne d'au moins l'un des paramètres de véhicule respectivement à l'aide d'une caractéristique parmi plusieurs caractéristiques pouvant être commutées entre elles ; et
- lesdites caractéristiques peuvent être commutées par l'intermédiaire de l'interface utilisateur (6) de l'unité de commande à distance (2).

7. Système de guidage de véhicule (1) selon l'une des revendications précédentes, dans lequel
- l'unité de traduction d'injonctions (3) et, éventuellement, l'unité de transfert (10) sont configurées pour réaliser périodiquement la génération et la transmission des messages aux appareils de commande intégrés du véhicule (4) avec un temps de cycle prédéfini d'environ 1 ms par exemple,
- dans lequel le message généré lors du cycle respectif et transmis par l'intermédiaire du système de communication propre au véhicule (5) est limité à un nombre prédéfini de valeurs de consigne de différents paramètres de véhicule, lequel nombre est en particulier de deux, de préférence de trois.

8. Système de guidage de véhicule (1) selon la revendication 6, dans lequel l'unité de traduction d'injonctions (3) est configurée pour déterminer la vitesse de crémaillère de consigne en tant que somme
- d'une première vitesse de crémaillère de consigne qui est définie proportionnellement à une instruction correspondante pour le guidage transversal du véhicule conformément à une caractéristique associée, et
- d'une deuxième vitesse de crémaillère de consigne qui est définie en fonction de la vitesse de véhicule et de la position de crémaillère actuelles reçues en tant que données de véhicule pertinentes pour le fonctionnement de la conduite conformément à une autre caractéristique prédéfinie pour la réduction de la course, et/ou
- d'une troisième vitesse de crémaillère de consigne qui est définie en fonction d'une vitesse de véhicule actuelle reçue en tant que données de véhicule pertinentes pour le fonctionnement de la conduite conformément à une autre caractéristique prédéfinie pour la simulation d'une adhérence.

9. Système de guidage de véhicule (1) selon l'une des revendications précédentes, dans lequel
- l'unité de traduction d'instructions (3) ou l'unité de transfert (10) présente au moins un dispositif de sécurité qui est configuré pour réaliser un processus de protection contre les abus, en particulier un processus d'authentification ou d'autorisation d'utilisateur, en tant que condition préalable à la transmission de messages par l'intermédiaire de son interface de communication filaire (K22 ; K23) au système de communication propre au véhicule (5).

10. Système de guidage de véhicule (1) selon l'une des revendications précédentes, comprenant en outre un véhicule (4) pouvant être commandé sans conducteur, qui présente les éléments suivants :
- un système de communication propre au véhicule (5) dans lequel les appareils de commande et les capteurs intégrés du véhicule (4) mentionnés sont connectés ; et
- l'interface filaire normalisée (K21) mentionnée du système de communication propre au véhicule (5) qui est configurée pour transmettre des messages aux appareils de commande intégrés du véhicule (4) et pour recevoir des données de véhicule définies pertinentes pour le fonctionnement de la conduite en provenance des capteurs et appareils de commande intégrés du véhicule (4).

11. Système de guidage de véhicule (1) selon la revendication 10, dans lequel
- le véhicule (4) est un véhicule sans volant de direction et sans pédales.

12. Système de guidage de véhicule (1) selon la revendication 10 ou 11, dans lequel
- l'unité de commande à distance (2) est configurée en tant qu'appareil mobile destiné à être utilisé à l'intérieur ou à l'extérieur du véhicule (4) ; et
- l'unité de traduction d'injonctions (3) ou l'unité de transfert (10) équipée de l'interface de communication filaire (K22 ; K23) est disposée dans le véhicule (4) et est raccordée à celui-ci par l'intermédiaire de l'interface filaire normalisée (K21) du système de communication propre au véhicule (5).
